# EUROPEAN PATENT APPLICATION

(11) **EP 2 082 977 A1**
(43) Date of publication of application: **29.07.2009**
(21) Application number: 08425034.9
(22) Date of filing: 24.01.2008
(51) Int. Cl.: B65F 1/00, G07F 7/06

(54) **Device for the recovery and storage of recyclable material**

(71) Applicant: Leoni, Fulvio, 08020 Tanaunella (OT) (IT)
(72) Inventor: Leoni, Fulvio, 08020 Tanaunella (OT) (IT)
(74) Representative: Postiglione, Ferruccio

(57) **Abstract**

Device (100) for the storage and recovery of objects made of recyclable material comprising an opening (1) for insertion of the objects, a storage receptacle (5) suitable to collect these objects, a press (6), a video game, a screen or display (2) and a keypad (3), a detection device (7) suitable to detect insertion of the objects and to activate the video game for a predetermined time. The device (100) also comprises at least a detection device (8) suitable to detect the level of filling of the storage receptacle (5) and a detection device suitable to detect the level of filling of the receptacle (9) for prize objects, said control devices being connected to relative data transmission devices, suitable to communicate with a data processing centre.

## Description

The present invention relates to a device for the recovery and storage of recyclable material.

The idea stems from the need to motivate the users of objects made of recyclable material to recover them, also avoiding littering the environment with them.

As it is known, containers to store objects made of recyclable materials, coming from domestic or personal use, are generally constituted by receptacles of considerable dimensions, positioned in public thoroughfares and/or inside public establishments.

The correct operation and success of the management of recyclable material collection, implemented by means of these containers, is strictly dependent on the personal motivation of those using them, as their use is left to the discretion of the user.

Moreover, emptying of these containers is managed according to predetermined calendar dates, causing serious ineffectiveness deriving from the fact that the effective level of fullness of the containers is not taken into due account.

The object of the present invention is therefore to solve the aforesaid problems by providing a device for the recovery and storage of objects made of recyclable material, which provides the user with an incentive to use them.

According to an example, a further object of the present invention is to provide a device for the recovery and storage of objects made of recyclable material which reduces on the site the volume of the material inserted therein by users.

Finally, according to a further example, the object of the present invention is to provide a device for the recovery and storage of objects made of recyclable material that allows automatic management of the collection times of the material from this device, by the party responsible for this service.

The present invention relates to a device for the recovery and storage of objects made of recyclable material according to claim 1, which should be referred to for brevity.

The subsequent claims show further preferred characteristics of the invention.

The invention is described in detail below, by way of non-limiting example, with reference to the accompanying drawings, wherein:
- Figure 1 shows a front view of the device for the recovery and storage of objects made of recyclable material according to the present invention;
- Figure 2 shows a partial sectional view of the internal assembly of the device according to the present invention;
- Figure 3 shows a further partial sectional view of the internal assembly of the device according to the present invention; and

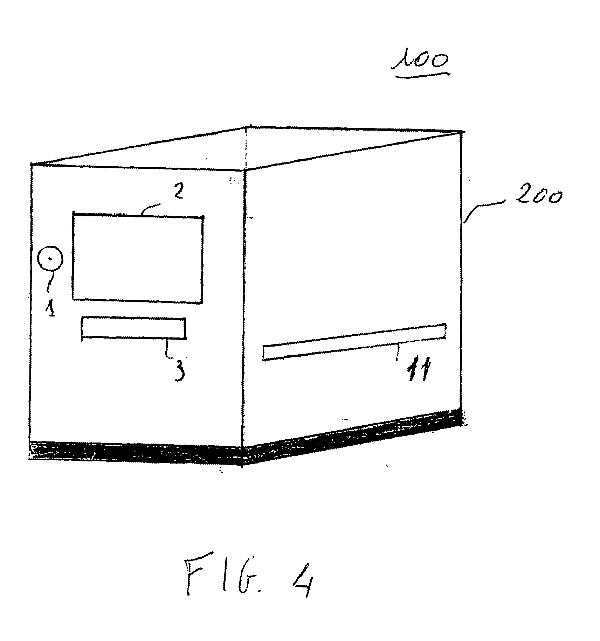

- Figure 4 shows an overall view of a possible embodiment of the external container of the device according to the following invention.

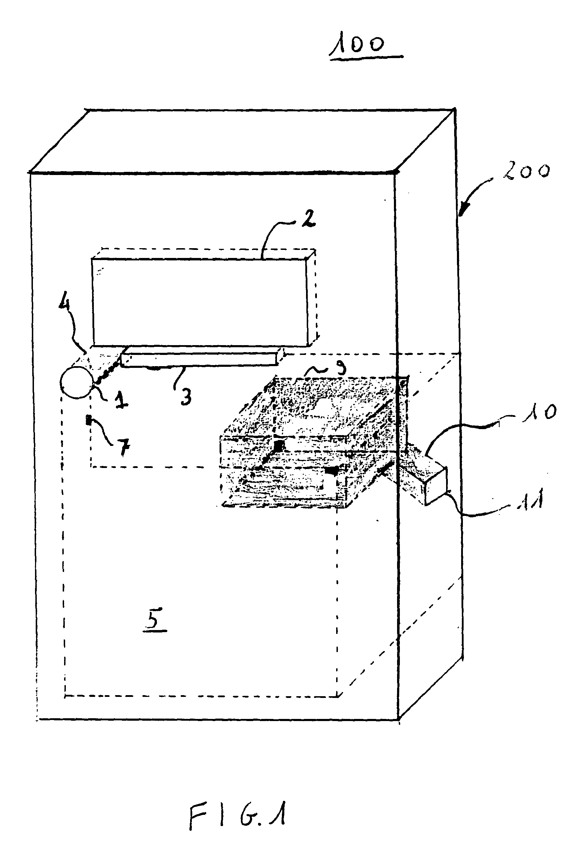

The device of the present invention is indicated as a whole in Figure 1 with the reference number (100).

The recovery device 100 comprises a container 200 comprising a control apparatus (not shown), such as a finite state machine or an electronic processor (i.e. a microcontroller or a computer provided with a processing unit, a memory, suitable interfaces and relative software), which performs control functions of the entire device 100.

The container 200 is structured, for example, substantially according to a parallelepiped that presents, in the front part thereof, an opening 1, a screen or display 2 and a keypad 3.

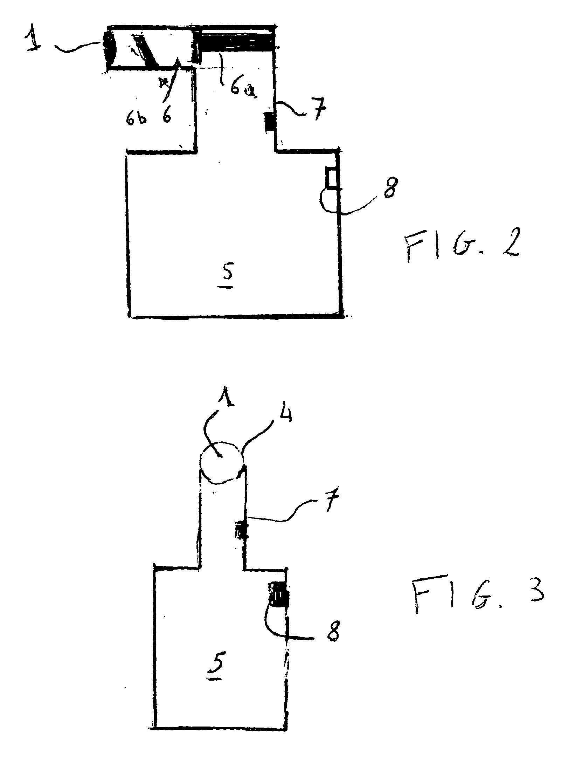

Said opening 1 is in connection, by means of a duct 4 (as also shown in Figures 2 and 3) with a storage receptacle 5.

Inside said duct 4, in proximity to said opening 1, there is positioned a pressing device 6, which compresses the objects inserted in the device 100 by the user, thus considerably reducing the volume of these objects. According to a particular embodiment, the compression device 6 comprises a press 6a, for example substantially cylindrical in shape and equipped with a compression head. This press 6a can, for example, move inside the duct 4 by hydraulic actuation, or by means of a motor or other suitable actuation means. The compression device 6 is also provided with a stop element 6b suitable to be positioned so that the object inserted is disposed between this element and the press 6a. The stop element 6b, disposed for example inside the duct 4, is such that it takes a reclined position, in which it allows passage of the object, and then moves to a pressing position, in which it takes the configuration shown in Figure 2. Passage from the reclined position to the pressing position can be obtained following an actuation signal generated by a proximity sensor (i.e. connected to the control apparatus) and not shown in the figure, inserted, for example, in the duct 4, which activates specific actuation means (for example, one or more metal springs) that move the stop element 6b.

This type of compression device 6 is very advantageous as it allows action to be taken on a single object (i.e. a single can), without therefore requiring excessive compression power and it is very safe as raising of the stop element 6b prevents the hand of the user from being crushed by the press 6a. Other types of compression device could nonetheless be utilized.

The device 100 also comprises a detection device 7 positioned on the internal surface of the duct 4, which allows detection of the passage of objects through this duct 4. Said detection device 7 is connected to the control apparatus of the device 100. Said detection device 7 can, for example, be provided by means of a proximity sensor of optical, capacitive or electro-mechanical type.

The device 100 is also provided with an apparatus for video games, placed inside the container 200, equipped with a processing device and a user interface, comprising said screen 2 and keypad 3 that allow interaction with the user of the device 100. The processing device, for example an electronic card that allows execution of video game software, can, for example, be integrated in the control apparatus of the device 100, or be separate therefrom. In any case, according to the example described, the processing device for video games is capable of receiving control signals from the control apparatus.

The storage receptacle 5 is equipped with a further detection device 8, suitable to detect the level of filling of said receptacle 5. According to the example considered, the detection device 8 is connected to the control apparatus, which is capable of communicating with a data processing centre outside the device 100. For this purpose, the control apparatus can be equipped with a transmission device (not shown) suitable to send data and/or information to the data processing centre by means of an appropriate transmission channel, such as a cable (i.e. a fibre optic cable or a twisted pair telephone cable) or through a wireless connection (i.e. based on mobile telephony technology).

Figure 1 also shows an assembly 300 comprising a receptacle for prize objects 9 connected by means of a duct 10 to a door 11, located on the side of the container.

The device 100 further comprises a detection device 12, placed inside the receptacle 9, suitable to detect the level of filling of said receptacle 9 and in connection with the control apparatus.

During operation of the recovery device of the present invention, an object made of recyclable material is inserted by a user in the device 100 through the opening 1.

The object thus inserted subsequently comes into contact with the pressing device 6, which reduces the volume thereof and subsequently passes by gravity through the duct 4 to said storage receptacle 5.

Following the passage of said object through the duct 4, the detection device 7, described above, sends a signal to said control apparatus which activates the video game which is thus activated for a predetermined time by the owner of the device 100, allowing the user of the device 100 to use this video game.

Upon expiry of said predetermined time, the device 100 dispenses a small prize object through the door 11.

In a preferred embodiment, said door 11 will be equipped with an automated opening and closing system, activatable through said video game or through other chosen devices, known in the state of the art.

The possibility of using the video game free of charge and the dispensing of a prize object are the elements that encourage a user to place the objects made of recyclable material inside the recovery device 100.

Advantageously, the external free surfaces of the container 200, which enclose the device 100 of the present invention, can be used as advertising spaces available for hire.

A further income deriving from the use of the device 100 will be provided by the sale of the recyclable material, recovered through this device, to companies that manage recycling of that particular material.

In particular, in a preferred embodiment the device 100 of the present invention is suitable to receive and store food containers, such as empty beverage cans.

Preferably, the material suitable to be stored and subsequently recycled through the device of the present invention will be constituted by aluminium.

In a further preferred embodiment, the prize objects dispensed by the device 100 will be supplied by companies wishing to obtain an advertising advantage, possibly also in combination with affixing of their brand to the prize object.

The recovery device 100 of the present invention can be placed in any public place supplied with electricity.

In the case in which the storage receptacle 5 is full, the detection device 8 sends a signal to the control apparatus, which transmits it, by means of the transmission device, to the data processing centre. This information will allow operators in the data processing centre to promptly organize an operation to empty the storage receptacle 5, so as to allow correct operation of the device 100.

Analogously, in the case in which the receptacle 9 is empty, the detection device 12, through the control apparatus and the transmission device, sends a signal to the data processing centre indicating that it is empty. This information will allow the operators in the data processing centre to promptly organize an operation to fill the receptacle 9 with the relative prizes, so as to allow correct operation of the device 100. The use of a transmission device in communication with the data processing centre allows optimization of the management of storage devices 100 preventing unnecessary inspections or periods in which the storage device is unusable.

Preferably, the device 100 will be located in the vicinity of bars, shopping malls, airports, schools, railway stations, underground railway stations, company canteens, seaside resorts and in any case will preferably be positioned at the side of beverage distributors.

According to a further preferred embodiment, the container 200 can be structured in the shape of a beverage can.

When the storage receptacle 5 is

From the description, it is apparent that the inventive concepts expressed are not limited by the example of application illustrated, but can be advantageously adapted to other analogous applications.

The present invention is therefore susceptible to numerous modifications and variants all falling within the inventive concept expressed in the appended claims, while the technical detail can vary according to requirements.

## Claims

1. Device (100) for the storage and recovery of objects made of recyclable material **characterized in that** it comprises:
- at least an opening (1) for insertion of the objects in recyclable material;
- at least a duct (4) that connects said at least one opening (1) with at least a storage receptacle (5), in which the objects in recyclable material inserted in the device (100) are stored;
- an apparatus for video game usable by a user;
- at least a first detection device (7), positioned inside said at least one duct (4), suitable to detect passage through the duct (4) of the objects in recyclable material inserted therein and to send an activation signal, following this passage, to the apparatus for video game.

2. Device (100) as claimed in claim 1, **characterized in that** the first detection device (7) comprises a proximity sensor.

3. Device (100) as claimed in the preceding claims, **characterized in that** said apparatus for video game is activated for a predetermined time.

4. Device (100) as claimed in claim 1, **characterized in that** it comprises at least a second detection device (8) placed inside said at least one storage receptacle (5) and a data transmission device, said second detection device (8) being suitable to detect the level of filling of the receptacle (5) and, through the data transmission device, to communicate with a data processing centre.

5. Device (100) as claimed in claim 1, **characterized in that** it comprises at least a receptacle for prize objects (9) and at least a duct (10) that connects said at least one receptacle for prize objects (9) with a door (11), located on the side of the container (200).

6. Device (100) as claimed in claim 5, **characterized in that** it comprises at least a third detection device (12), positioned inside said at least one receptacle for prize objects (9) and a data transmission device, said third detection device (12) being suitable to detect the level of filling of the receptacle (9) and, through the data transmission device, to communicate with a data processing centre.

7. Device (100) as claimed in claims 3 and 5, **characterized in that,** once said predetermined time has expired, the device (100) dispenses a prize object, contained in the receptacle for prize objects (9), to the user by means of the door (11).

8. Device (100) as claimed in at least one of the preceding claims, **characterized in that** said device (100) is suitable to receive and to store food containers, such as empty beverage cans.

9. Device (100) as claimed in at least one of the preceding claims, **characterized in that** the material suitable to be stored and subsequently recycled through the device (100) is made of aluminium.

10. Device (100) as claimed in at least one of the preceding claims, **characterized in that** the container (200) is structured in the shape of a beverage can.

11. Device (100) as claimed in at least one of the preceding claims, comprising a pressing device (6) to compress the recyclable object.

12. Device (100) as claimed in claim 11, wherein said pressing device (6) comprises a movable press (6a) and a stop element (6b) disposed inside the duct (4) so that said recyclable object can be pressed between the press and the stop element.

13. Device (100) as claimed in claim 12, wherein the stop element (6b) is movable between a first position in which it allows passage of the recyclable object and a second position in which it blocks said recyclable object for the purpose of pressing.

14. Device (100) as claimed in claim 1, wherein said apparatus for video game comprises a screen or display (2) and a keypad (3).

15. Device (100) as claimed in at least one of the preceding claims, also comprising a control apparatus suitable to manage said apparatus for video game, said detection devices and said transmission device.
